# EUROPEAN PATENT SPECIFICATION

(11) **EP 1 836 481 B1**
(45) Date of publication and mention of the grant of the patent: **24.02.2010**
(21) Application number: 05825465.7
(22) Date of filing: 19.12.2005
(51) Int. Cl.: G01N 23/04, H04N 5/32, G01T 1/24

(54) **PIXEL IMPLEMENTED CURRENT AMPLIFIER**
PIXEL-REALISIERTER STROMVERSTÄRKER
AMPLIFICATEUR DE COURANT MIS EN OEUVRE PAR PIXEL

(30) Priority: 06.01.2005 EP 05100060
(43) Date of publication of application: 26.09.2007
(73) Proprietor: Philips Intellectual Property & Standards GmbH, 20099 Hamburg (DE); Koninklijke Philips Electronics N.V., 5621 BA Eindhoven (NL); Fraunhofer-Gesellschaft zur Förderung der angewandten Forschung e.V., 80686 München (DE)
(72) Inventor: STEADMAN, Roger, Philips I.P. & Standards GmbH, 52066 Aachen (DE); VOGTMEIER, Gereon, Philips I.P. & Standards GmbH, 52066 Aachen (DE); HEHEMANN, Ingo, Philips I.P. & Standards GmbH, 52066 Aachen (DE); IBNOU QUOSSAI, S.E., Philips I.P. & Standards GmbH, 52066 Aachen (DE); OEZKAN, Erol, Philips I.P. & Standards GmbH, 52066 Aachen (DE); KEMNA, Armin, Philips I.P. & Standards GmbH, 52066 Aachen (DE)
(74) Representative: Schouten, Marcus Maria
(86) International application number: PCT/IB2005/054299
(87) International publication number: WO 2006/072848

(56) References cited:
- EP-A- 0 793 380
- WO-A-03/061277
- US-A1- 2003 160 882
- US-A1- 2003 234 341
- US-B1- 6 635 857

## Description

### Field of the invention

The present invention relates to the field of radiation detection and in particular without limitation to detection of X-rays.

### Background and prior art

Detection of X-rays is a key technology for X-ray examination particularly for medical examination purposes, such as optical inspection of structures that are located e.g. inside a human body. X-ray detectors have been developed in a large variety for various Computer Tomography (CT) applications. Typically, X-ray detectors have a number of sensor chips that feature a two-dimensional array of discrete photodiodes, each of which representing an image pixel. Further, X-ray detectors typically make use of read-out electronics and signal processing means for generating a visual image on the basis of acquired radiation and that are implemented as external devices or units. In this context an external devices or external units refer to a devices that are implemented outside the radiation sensitive detection area of the X-ray detector, i.e. outside the sensor chip.

Photodiodes in their function as photoelectric conversion means provide generation of electric charge in response to impingement of electromagnetic radiation. In principle also for X-ray detection, where photodiodes are typically combined with scintillators, these photodiodes may be implemented on the basis of complementary metal oxide semiconductor technology (CMOS). In particular with respect to X-ray detection CMOS implemented photodiodes typically feature a limited sensitivity and a reduced response with respect to dedicated expensive photodiodes that are particularly designed for X-ray applications. By means of an amplification of the current generated by a CMOS implemented photodiode, the sensitivity as well as the response of a CMOS implemented photodiode array can be generally increased.

However, a current generated by a photodiode in response to impingement of e.g. light converted from X-ray via scintillator material is rather low in magnitude and thus very sensitive to external disturbances and perturbations. Hence, aspects of noise reduction have to be taken into account when implementing an X-ray detection chip with amplification of the photoelectric current.

Further, when implementing the photodiode array on the basis of CMOS technology, it would be beneficial to make use of existing read-out electronics or read-out devices that have been developed for non-CMOS implemented photodiodes. Since CMOS photodiode arrays typically feature different output parameters compared to X-ray dedicated photodiodes, a cost efficient array of CMOS implemented photodiodes do in principle not provide necessary radiation detection performance and may not allow for a straightforward or universal coupling to existing read-out electronics or read-out devices.

The present invention therefore aims to provide a radiation sensor with current amplification for reducing the general impact of noise and for adapting the sensor output to specific sensor read-out devices.

### Summary of the invention

The present invention provides a radiation sensor that has a plurality of sensor elements. Each one of the sensor elements has a radiation detection portion that is adapted to generate an electric current in response to impingement of electromagnetic radiation and current amplification means for continuous amplification of the electric current. Typically, the radiation sensor features a one-dimensional or two-dimensional array of sensor elements, that are also denoted as pixels, each of which representing a smallest discrete radiation detection area of the radiation sensor. According to the invention, each of these pixels has a radiation sensitive portion, such as a photodiode, providing an electric current, i.e. a photoelectric current, in response to an incident radiation intensity. Additional to this photoelectric conversion means each pixel of the radiation sensor further has current amplification means for locally amplifying a generated photoelectric current.

Consequently, the amplification is therefore performed directly on pixel level within the pixel itself, which is beneficial with respect to noise aspects. By means of this local built in current amplification, a transmission of photoelectric currents of low magnitude that are quite noise sensitive, is effectively avoided. In this way the pixel implemented current amplifier provides a current output of each pixel with an appreciable magnitude, that is less sensitive to noise and disturbances and which therefore allows transmission of acquired signals and implementation of respective signal processing means at remote locations, i.e. locations that are not within the area of the sensor chip.

Further, by amplifying the photoelectric current generated by each sensor element of the radiation sensor, the current output of the radiation sensor can be arbitrarily adapted to specifications of dedicated read-out electronics and read-out devices. In this way, the diversity and universal use of the radiation sensor can be significantly enhanced, allowing to adapt the sensor output to almost arbitrary specifications of various read-out devices.

According to the invention, the current amplification means provide continuous amplification of the electric current by making use of a bias current. Further, each one of the sensor elements of the radiation sensor comprises a bias current reproduction module for receiving an input bias current from a first sensor element and for providing the bias current to the current amplification means. The bias current reproduction module is further adapted to generate an output bias current serving as an input bias current for a consecutive sensor element. Therefore, the current reproduction module is adapted to generate a bias current as well as to provide an output current in response to receive an input current.

The bias current is provided to the current amplification means of the sensor element whereas the output current is provided to another, typically adjacently located, sensor element, where it is fed into a corresponding current reproduction module. The current reproduction module provides reproduction, duplication or generating of a replica of a bias current and therefore allows to provide the bias current to each one of the sensor elements of the radiation sensor without a central bias current distribution mechanism.

In particular, the current reproduction module enables a decentralized distribution of a bias current to a plurality of sensor elements, preferably to all sensor elements or pixels of the radiation sensor. Consequently, distribution of the bias current is implemented in each sensor element itself which principally allows for a large variety of architectures for coupling of the plurality of sensor elements of the radiation sensor.

Depending on the specifications of the current amplification means of each sensor element, the current reproduction module might be adapted to produce an output current that differs from the input current and that also differs from the bias current. This enables distribution of different bias currents to different sensor elements of the radiation sensor if required. For instance, the output current generated by the current reproduction module might be coupled in parallel to two consecutive sensor elements. In this case in order to have equal input currents for all sensor elements, the output current has to be amplified by a factor of two.

According to a further preferred embodiment of the invention, the sensor elements of the radiation sensor are coupled in a cascaded way by means of the sensor element's current reproduction modules. In this way the output current generated by a current reproduction module of a first sensor element is coupled to the current reproduction module of a second sensor element as an input current. This current reproduction module in turn provides an output current that is coupled to a third sensor element's current reproduction module and so on. Hence, all sensor elements of a radiation sensor can be effectively coupled by means of their current reproduction module according to e.g. a daisy chain architecture or topology. If the radiation sensor features a two dimensional array of sensor elements, the sensor elements may for example be coupled row-wise or column-wise. Further, also a row and column-wise interlinking of the various sensor elements of a radiation sensor is possible.

For instance, with a row-wise daisy chain architecture the last sensor element of the first row might be coupled to the last sensor element of the second row, which in turn is coupled to the second last sensor element of the second row and so on. In such an interlinking architecture, the wiring complexity with respect to input/output (I/O) ports is kept at a low level, which is advantageous with respect to cost efficiency and manufacturing complexity.

According to a further preferred embodiment of the invention, the current reproduction module is coupled to a set of sensor elements and is further adapted to provide each sensor element of the set of sensor elements with the input current. In this embodiment, the various sensor elements of the radiation sensor are typically clustered into sets of sensor elements and each sensor element of a set of sensor elements receives an input current from a common sensor element. Consequently, a set of sensor elements might be clustered and the input current provided to the cluster of sensor elements is internally distributed to the sensor elements of the cluster. Instead of a strict cascaded way, this embodiment allows for a clustering of sets of sensor elements, which might be advantageous for dedicated radiation sensor applications.

According to a preferred embodiment of the invention, the input current and the output current of the current reproduction module are substantially equal in magnitude. Hence, the current reproduction module therefore serves to provide a duplicate or to provide a replica of the input current to a consecutive, e.g. adjacently located, sensor element. Hence, each sensor element or pixel of the radiation sensor receives the input current and provides an output current of equal magnitude which guarantees a homogeneous bias current distribution if each input port of a sensor element is coupled to exactly one output port of another sensor element. In this way nearly all sensor elements of the radiation sensor may feature the same structure as well as the same electronic properties.

Among the plurality of the radiation sensor's sensor elements only two sensor elements may not correspondingly be coupled to consecutive or adjacently located sensor elements. Typically, there is at least one sensor element that is coupled to an external bias current source and at least one sensor element, whose output port is not coupled to an input port of another sensor element. However, the bias current that is coupled to the current amplification means may still differ from input current as well as output current of the current reproduction module. In principle, the bias current that is coupled from the current reproduction module to the current amplification means may be amplified or attenuated by the current reproduction module before it is coupled as bias current to the current amplification means. This feature allows for a universal adaptation of a specific current reproduction module to a variety of different current amplifiers featuring different specifications with respect to a bias current.

Further, the bias current and the input current may also be substantially equal in magnitude. Taking further into account that the input current and the output current may also be substantially equal in magnitude, all three currents, namely bias current, input current and output current are all equal in magnitude. In this case the current reproduction module serves as a current duplication module generating two identical duplicates of an input current. This allows for a homogeneous architecture of the entire radiation sensor, wherein each sensor element, i.e. pixel, features an identical internal structure.

According to a further preferred embodiment of the invention, the current amplification means and/or the current reproduction module comprise the at least one current mirror circuit. Making use of a current mirror circuit for current amplification allows to amplify the current generated by the radiation detection portion without a substantial impact on the electric properties of the radiation detection portion. Also, usage of a current mirror circuit allows for an efficient reproduction of an input current with a negligible impact on the electric properties of an output port of a consecutive sensor element providing the input current. Usage of a current mirror circuit is therefore a cost effective and efficient means for the bias current reproduction and current amplification provided by the current reproduction module and current amplification means, respectively.

According to a further preferred embodiment of the invention, the current amplification means comprise a transimpedance amplifier. This transimpedance amplifier makes use of internal current to voltage conversion by means of resistors.

Further, the current amplification means may also be adapted to substantially linearly amplify the electric current provided by the radiation detection portion. Both the current mirror circuit as well as the transimpedance amplifier are preferably operable in a linear amplification mode. Therefore, operation points of either current mirror circuit and transimpedance amplifier can be arbitrarily modified in order to provide a substantially linear amplification of the photoelectric current.

Moreover, the current mirror circuit may also be implemented as a regulated current mirror circuit and may further comprise at least a first and a second transistor featuring first and second gain that finally determine the overall gain of the current mirror circuit. The gain of the current mirror circuit is typically governed by the ratio of the geometry of respective first and second transistors.

In another embodiment, the radiation sensor comprises a current source providing the bias current for the current mirror circuit. By means of the current source, the operation point of the current mirror can be appropriately tuned to ensure that the bandwidth specifications for a given application can be matched.

According to a further preferred embodiment of the invention, the current reproduction module further comprises a second current mirror circuit for coupling the bias current and for coupling the amplified bias current to the current amplification means. Typically, the current amplification means provide amplification of the bias current as well as amplification of the photoelectric current generated by the radiation detection portion of the sensor element. Since an amplified bias current does not provide any information of the acquired radiation that might be useful for signal processing and image acquisition, the amplified bias current, which is a by-product of the amplification of the photoelectric current has to be subtracted from the amplified output signal of the current amplification means.

Preferably, the second current mirror of the current reproduction module effectively provides subtraction of the amplified bias current from the output current of the current amplification means. Consequently, by making use of both current mirror circuits of the current reproduction module, the operation point of the current amplification means can be appropriately tuned and its amplified output signal can be modified in such a way that it only represents an amplified photoelectric current.

In a further preferred embodiment of the invention, the current amplification means are adapted to generate an amplified current in response to receive the electric current from the radiation detection portion. The amplified current generated by the current amplification means may also have an opposite sign compared to the electric current generated by the radiation detection portion. This inversion of the current direction is not mandatory but might be required for adaptation of the radiation sensor to an external read-out device. Depending on the type of read-out device and the specific implementation of the radiation sensor, gain of the pixel implemented current amplification as well as polarity of the amplified electric current can be appropriately adapted.

According to a further preferred embodiment of the invention, the radiation detection portion and/or the current amplification means and/or the current reproduction module are implemented on the basis of complementary metal oxide semiconductor technology (CMOS) or similar integrated circuit production processes. Further, the single components of each sensor element, namely radiation detection portion, current amplification means and current reproduction module are all adjacently arranged on a common substrate. In particular, such a CMOS technology implementation allows for a cost effective realization of the radiation sensor and is further suitable for a mass production of radiation sensors and sensor elements.

According to a further preferred embodiment of the invention, the radiation detection portion or photoelectric detection means of each sensor element are sensitive to X-rays. Hence, the photoelectric detection means can for example be implemented as a photodiode in combination with a scintillating material. In that sense, the entire radiation sensor is applicable to X-ray detection and is preferably designed to be integrated into an X-ray examination apparatus, e.g. a CT-scanner, for X-ray examination of biological tissue or non-accessible structures located in a bulk of a medium.

In another aspect the invention provides a radiation sensor that has a plurality of sensor elements, each of which comprising a photoelectric detection portion that is adapted to generate an electric current in response to impingement of electromagnetic radiation and a current amplifier for generating an amplified current by means of continuous amplification of the electric current. The sensor element typically corresponds to a pixel of the radiation sensor which in turn typically comprises a one- or two-dimensional array of sensor elements, i.e. pixels. In this context continuous amplification of the electric current refers to the aspect that the current amplifier features a continuous operation mode. Hence, the current amplifier of the sensor element is not operated in a pulsed mode so as to accumulate electric charge that becomes subject to amplification.

Each one of the sensor elements of the radiation sensor further has a current reproduction module for receiving an input current from a first sensor element, for providing a bias current to the current amplifier and for generating an output current that serves as an input current for a consecutive sensor element. Preferably, the consecutive sensor element as well as the first sensor element are adjacently arranged with respect to the sensor element. Such an adjacent arrangement of sensor elements that are mutually coupled with respect to the bias current is advantageous with respect to wiring complexity and allows for a cascaded, homogeneous and highly effective distribution of a bias current to all sensor elements of the radiation sensor.

In still another aspect the invention provides an X-ray examination apparatus having at least one radiation sensor that has a plurality of sensor elements, each of which comprising a photoelectric detection portion that is adapted to generate an electric current in response to impingement of electromagnetic radiation and a current amplifier for generating an amplified current by means of continuous amplification of the electric current. The sensor element typically corresponds to a pixel of the radiation sensor which in turn typically comprises a one- or two-dimensional array of sensor elements, i.e. pixels. In this context continuous amplification of the electric current refers to the aspect that the current amplifier features a continuous operation mode. Hence, the current amplifier of the sensor element is not operated in a pulsed mode so as to accumulate electric charge that becomes subject to amplification.

Each one of the sensor elements of the radiation sensor further has a current reproduction module for receiving an input current from a first sensor element, for providing a bias current to the current amplifier and for generating an output current that serves as an input current for a consecutive sensor element. Preferably, the consecutive sensor element as well as the first sensor element are adjacently arranged with respect to the sensor element. Such an adjacent arrangement of sensor elements that are mutually coupled with respect to the bias current is advantageous with respect to wiring complexity and allows for a cascaded, homogeneous and highly effective distribution of a bias current to all sensor elements of the radiation sensor.

Further, it is to be noted that any reference signs in the claims are not to be construed as limiting the scope of the present invention.

### Brief description of the drawings

In the following various embodiments of the invention will be described by making reference to the drawings in which:
- Figure 1: illustrates a schematic block diagram of the radiation sensor and a sensor element,
- Figure 2: illustrates a schematic block diagram of a radiation detector having a plurality of radiation sensors, each of which having a plurality of sensor elements,
- Figure 3: shows a block diagram of concatenated sensor elements of the radiation sensor,
- Figure 4: illustrates a block diagram of the current amplifier implemented as transimpedance amplifier,
- Figure 5: shows a block diagram of the current amplifier implemented as current mirror,
- Figure 6: shows a schematic block diagram of the internal structure of a sensor element,
- Figure 7: shows a detailed circuit diagram of the current reproduction module.

### Detailed description

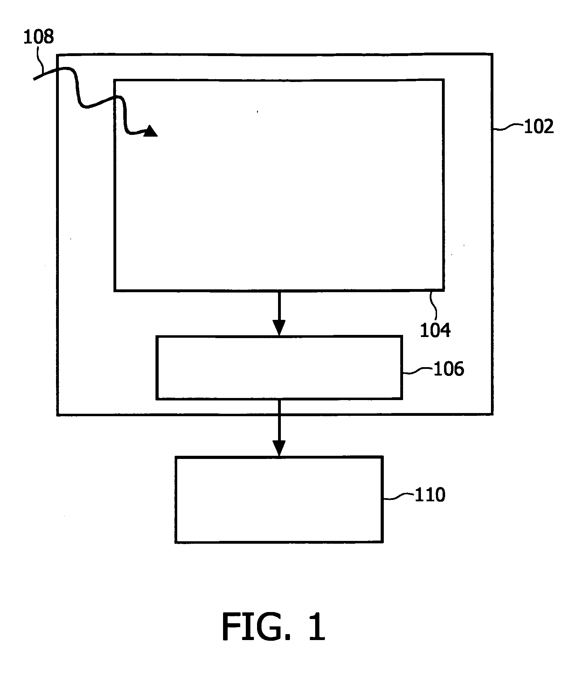

Fig. 1 shows a schematic block diagram of a radiation sensor that has at least one sensor element 102, which in turn comprises a radiation detection area or radiation detection portion 104 and a current amplifier 106. The radiation detection portion 104 provides an electric current to the current amplifier 106 in response to detection of electromagnetic radiation 108. Typically, the radiation detection area 104 is implemented as a CMOS photodiode providing a photoelectric current to the amplifier 106, whose magnitude corresponds to the intensity of the incident electromagnetic radiation 108. Typically, the radiation detection portion 104 covers the major part of the area of the sensor element 102. Also, the current amplifier 106 is adjacently arranged next to the radiation detection portion and both radiation detection portion 104 and current amplifier 106 are implemented on a common substrate.

The amplified current generated by the amplifier 106 in response to the photoelectric current provided by the radiation detection portion 104 is typically coupled to a signal processing module 110. Due to the current amplification, the signal processing module 110 might be implemented at a remote location with respect to the sensor element 102, e.g. it may be implemented outside the area of the radiation sensor 100 and its array of sensor elements 102. In particular, such an implementation requires respective electric conductors between the current amplifier 106 and the signal processing module 110. The implementation of the current amplifier 106 is beneficial, because the amplified current is less sensitive to external disturbances and noise. Further, amplification by means of the in-pixel amplifier 106 allows to implement the radiation detection portion 104 on the basis of CMOS technology and therefore serves to compensate the restricted sensitivity and response of the CMOS implemented radiation detection portion 104 with respect to expensive dedicated photoelectric detection elements.

Typically, the signal processing module 110 is coupled to a plurality of sensor elements 102. For instance, a single signal processing module may serve as a reading device for the entire radiation sensor. Therefore, the signal processing module may be adapted to process the entirety of signals acquired by e.g. a CMOS implemented radiation sensor 100. Preferably, the sensor element 102 as well as the signal processing module 110 are implemented by means of an integrated circuit.

The signal processing module 110 may for instance be designed for a different type of radiation detector 100 that is e.g. not implemented on the basis of CMOS technology. In particular by means of the current amplification implemented in each pixel 102 of the radiation detector 100, the radiation detector 100 can be universally adapted for read-out by means of a distinct signal processing module 110 or corresponding read-out device. The current amplification provides a matching of the sensor element's output to the input specifications of the signal processing module 110 or similar read-out devices.

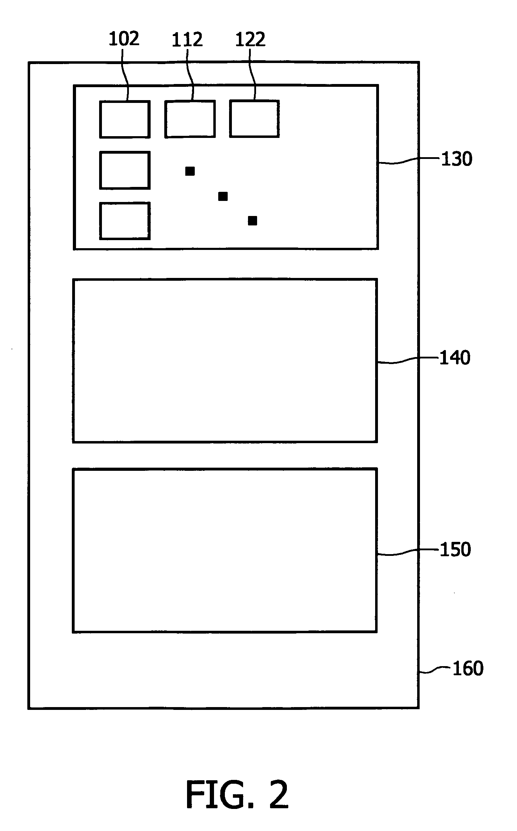

Figure 2 schematically shows a block diagram of a radiation detector 160. Here, the radiation detector 160 has three radiation sensors 130, 140, 150. The internal structure of radiation sensor 130 is exemplary illustrated. Radiation sensor 130 comprises an array of sensor elements 102, 112, 122.... Each one of these sensor elements 102, 112, 122 comprises a radiation detection area 104, e.g. a photodiode, as well as a signal processing module 106 as illustrated in Fig. 1. Each one of the sensor elements 102, 112, 122 is adapted to separately amplify the photoelectric current generated by the respective photodiode in response to impingement of electromagnetic radiation, in particular X-rays. In typical implementations, e.g. in X-ray examination apparatuses, such a radiation detector 160 may have a large amount of radiation sensors, like a few hundreds. These radiation sensors 130, 140, 150 are also denoted as light sensitive chips. Also, in typical implementations, each radiation sensor 130, 140, 150 may have a large amount of pixels even hundreds or thousands, each of which featuring a size in the square millimeter or sub-square millimeter range.

In particular, due to the integrated realization of a photoelectric conversion part and respective pre-processing means on a common substrate by making use of CMOS technology, such a chip 130 can be produced in a cost efficient way in a mass production process.

Moreover, each one of the sensor elements 102, 112, 122 may comprise a bias current regeneration module and the array like arranged sensor elements 102, 112, 122 are interlinked by means of their bias current regeneration modules for bias current regeneration and bias current distribution. Preferably, the various sensor elements or pixels 102, 112, 122 are interlinked in a daisy chain configuration or in a cascaded way, e.g. row-wise or column-wise or even combined row-and column-wise.

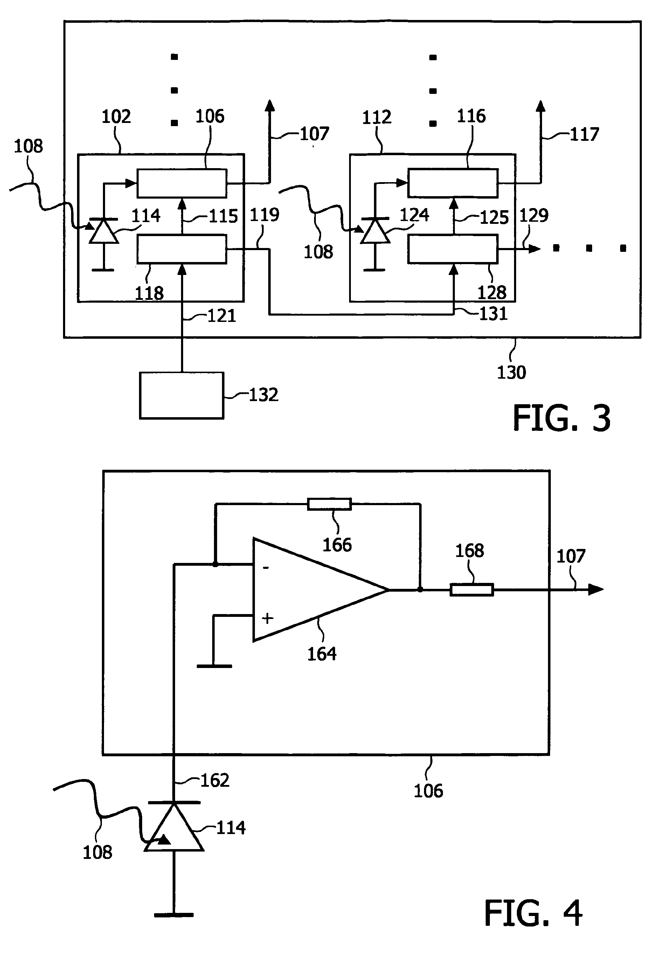

Figure 3 shows a schematic block diagram of a radiation sensor 130 that has at least two sensor elements 102, 112. Each sensor element 102, 112 has photoelectric conversion means, such as a photodiode 114, 124, a current amplifier (106,116) as well as a bias current regeneration module (118,128). The photodiodes 114, 124 are adapted to generate electric charge in response to an incident radiation 108. Charge generated by the photodiodes is provided as a photoelectric current to the current amplifiers (106,116). The current amplifiers provide significant amplification of the photoelectric current before the amplified current is coupled via the amplifier output 107, 117 to successive signal processing means for generating e.g. visual images on the basis of the acquired radiation 108.

The current amplifiers 106, 116 are typically implemented by means of a current mirror circuit making use of at least two transistors of different geometries and an operational amplifier that serves to keep the amplification of the at least two transistors in a linear regime. In this linear amplification regime the transistors of the current amplifiers 106, 116 require a distinct bias current that is provided by the bias current regeneration module 118, 128. For instance, bias current regeneration module 118 provides a bias current to the current amplifier 106 and bias current regeneration module 128 provides a bias current to the current amplifier 116.

The bias current regeneration module 118 receives an input current from an external current source 132 via the regenerator input port 121. The bias current regeneration module 118 then generates an output current that is provided to the regenerator output port 119 and also generates the bias current that is coupled to the current amplifier via the regenerator output port 115. Preferably, output current as well as bias current are of equal magnitude and both feature the same magnitude than the input current provided by the current source 132.

The output current provided to the regenerator output 119 serves as an input current for the adjacently arranged sensor element's 112 bias current regeneration module 128. Therefore, the output port 119 of the regeneration module 118 is coupled to the input port 131 of the regeneration module 128. The bias current regeneration module 128 in turn acts in much the same way as the bias current regeneration module 118. It provides a bias current to the current amplifier 116 via output port 125 and provides another output current to a consecutive sensor element via output port 129. In this way with respect to bias current coupling, the various sensor elements 102, 112 of the radiation sensor 130 are coupled in a cascaded way, featuring e.g. a daisy chain architecture.

This cascaded or concatenated coupling of the bias current effectively replaces a central bias current distribution architecture and effectively keeps a complexity of wiring of the various sensor elements 102, 112 of the radiation sensor 130 at a low level. This is particularly advantageous with respect to manufacturing costs and radiation sensor design. Also, this implementation provides a high level of symmetry of the various sensor elements 102, 112 because the mutual impact among the sensor elements 102, 112 is substantially equal.

The general topology of interlinking the sensor elements 102, 112 is by no means limited to the illustrated daisy chain architecture. Other interlinking architectures, making use of clustering of a set of sensor elements are also possible. Moreover, the various currents like bias current, output current and input current of a particular bias current regeneration module 118, 128 do by no means have to be substantially equal in magnitude. Depending on the interlinking architecture of the sensor elements 102, 112, the output current provided by e.g. the bias current regeneration module 118 might be coupled to a plurality of bias current regeneration modules of a corresponding plurality of sensor elements.

By means of the pixel implemented bias current regeneration, the entire radiation sensor chip or radiation sensor 130 and all its sensor elements can be separately provided with a common bias current by means of a single coupling of the radiation sensor 130 to an external bias current source 132. Hence, distribution and reproduction of the bias current is internally provided by the radiation sensor and its sensor elements 102, 112 themselves. In particular this sensor implemented bias current regeneration and distribution enables the realization of a modular radiation sensor concept, where radiation sensors 130, current sources 132 as well as read-out electronics for the radiation sensor might be provided as separate interchangeable modules. This allows to increase the general universality and application area of a complete radiation sensing or radiation detection system.

Fig. 4 shows a block diagram of the current amplifier 106 implemented by means of a transimpedance amplifier Here, the current amplifier has an operational amplifier 164 , like an e.g. Operation Transconductance Amplifier (OTA) and two resistors 166, 168. The operational amplifier 164 and the resistor 116 effectively correspond to the transimpedance amplifier. For instance, the input port 162 providing the photoelectric current generated by the photodiode 114 is coupled to the inverting input port of the operational amplifier 164. The positive input port of the operational amplifier in this case is coupled to ground. The resistor 166 is coupled in parallel to the operational amplifier's inverting input port and to its output port. Resistor 168 in turn is coupled in series to the output of operational amplifier 164 and to the output port 107 of the current amplifier 106. The gain factor of this current amplifier 106 is approximately given by R1/R2, where R1 corresponds to resistor 166 and R2 corresponds to resistor 168.

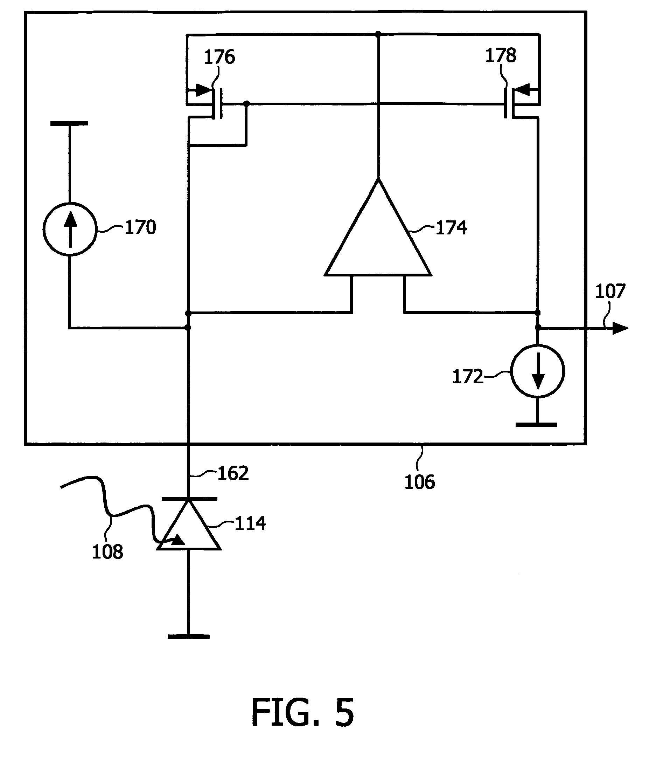

Figure 5 illustrates the internal structure of the current amplifier 106 implemented as a regulated current mirror. Here, the radiation detection portion is represented by a photodiode 114 that provides a photoelectric input current at the input port 162 of the current amplifier 106. The photodiode 114 is typically implemented on the basis of CMOS technology. The current amplifier 106 further has transistors 176 and 178 as well as an operational amplifier 174, like e.g. an Operation Transconductance Amplifier (OTA). Further, the current amplifier 106 has current sources 170 and 172.

The photodiode 114 provides a photoelectric current that is indicative of the intensity of incident radiation at the photodiode. The current source 170 provides a bias current for both transistors 176, 178. With this current supply 170, the operation points of the transistors 176, 178 is appropriately tuned. Transistor 176 has a certain geometry (W/L)₁ whereas transistor 178 features a geometry (W/L)₂, where W and L are the width and length of the transistors, respectively. The overall gain of the current amplifier 106 is then given by the ratio of the geometry of transistor 178 divided by the geometry of transistor 176 and is therefore given by N, i.e. N=(W/L)₂/(W/L)₁. The two input ports of the operational amplifier 174 are coupled to the drain of transistor 176 and transistor 178. The operational amplifier 174 serves to compensate for any non-linear amplification effects of the two transistors 176, 178. Therefore, the output of the operational amplifier 116 is coupled to the source of the transistors 176 and 178. The operational amplifier, e.g. the OTA, serves to tune the operation points of the transistors 176, 178 in such a way, that they provide a substantially equal drain source voltage for a precise matching of the gain factor. In this sense a non-linear behavior of the transistors can be effectively counteracted.

The second current source 172 serves to subtract a current that is N times the bias current I_{bias}, since the current flowing through transistor 178 equals N * (I_{bias} + I_{photoelectric} ), where I_{photoelectric} corresponds to the current provided by the photodiode 114. The current source 172 therefore effectively serves to subtract the amplified bias current N * I_{bias} from the current of transistor 178. In this way the output current at the output port 107 substantially equals N * I_{photoelectric} as required. The current source 172 that substantially provides subtracting of a current from the output of the transistor 178 can for example be implemented by making use of a similar current mirror approach as shown in this block diagram.

Generally, the polarity of the output current is reversed with respect to the polarity of the photoelectric current provided by the photodiode 114. Hence, the output current that can be obtained from output port 107 flows in a different direction and typically differs in magnitude by a factor of N. If required by the signal processing module 110 or read-out device, the polarity of the output current may be switched in that sense that it features the same polarity as the photoelectric current.

Both current amplifier approaches illustrated by Fig. 4 and Fig. 5 can be used to provide in pixel current amplification of the radiation sensor. In this way an acquired electrical signal, i.e. a current, is locally amplified before it becomes subject to transmission for data processing purposes. In this way the entire mechanism of data acquisition and signal transmission becomes less sensitive to noise and other disturbances. Further, by providing a local built-in current amplification, sensitivity as well as response of the radiation detector can be effectively increased, thus allowing for implementation of cost effective CMOS based detector arrays for e.g. X-ray examination applications. The invention also establishes a modular concept for X-ray detectors and respective read-out electronic components.

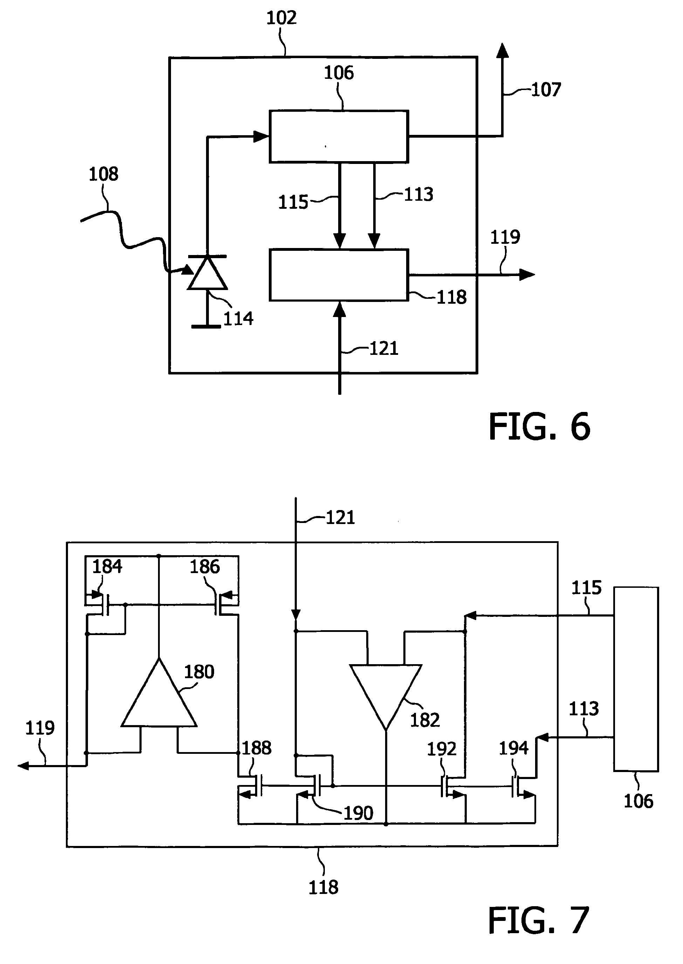

Figure 6 schematically shows the internal structure of the sensor element 102, where current amplifier 106 and bias current regeneration module 118 are connected by means of two separate conductors. Output port 115 of the bias current regeneration module 118 is coupled to the current amplifier 106 for providing a specific bias current for amplification of the photoelectric current provided by the photodiode 114. In this illustration the arrow of the output port 115 pointing towards the current amplification module 118 accounts for the polarity oft the bias current. The amplifier output 113 provides the amplified bias current to the bias current regeneration module 118. Since the current amplifier 106 is typically adapted to amplify both photoelectric current and bias current, the amplified bias current has to be subtracted from the overall amplified current generated by the current amplifier 106. Hence, output port 115 of figure 6 corresponds to the bias current source 170 of figure 5, whereas the amplifier output 113 of figure 6 corresponds to the bias current source 172 of figure 5.

In this way the amplified bias current is fed back to the bias current regeneration module 118 and the amplified photoelectric current, which is indicative of acquired electromagnetic radiation 108 is provided at the amplifier output port 107 for subsequent signal processing. The bias current provided to the current amplifier 106 typically has such a polarity that it flows from the current amplifier 106 to the bias current regeneration module 118.

Figure 7 illustrates a detailed circuit diagram of the bias current regeneration module 118. The bias current regeneration module 118 has a first current mirror circuit featuring transistors 184, 186 as well as the operational amplifier 180, like e.g. an Operation Transconductance Amplifier (OTA). Further, the regeneration module 118 has a second current mirror circuit that has transistors 190, 192 as well as an operational amplifier 182. The two current mirror circuits are coupled to each other via transistor 188. In particular, the second current mirror circuit is coupled to the current amplifier 106. It serves to provide the bias current via port 115 as well as an amplified bias current to the amplifier port 113. Preferably, transistors 184, 186, 188, 190 as well as transistor 192 feature the same electric properties and have a substantially equal gain. In contrast, transistor 194 has a gain that is N times larger than the gain of transistors 184, 186, 188, 190, 192. The factor N corresponds to the gain of the current amplifier 106 and therefore also represents a factor between the magnitude of the bias current and the magnitude of the amplified bias current.

The first current mirror circuit effectively serves to reproduce the input current that is coupled into the bias current reproduction module 118 via the input port 121. This input current may be provided by an external bias current source or by an adjacently located pixel element's bias current regeneration module. The first current mirror circuit consisting of transistors 184, 186 and operational amplifier 180 serves to generate a replica of the input current and to provide this replicated input current to the output port 119, that is typically coupled to a consecutive sensor element of the radiation sensor. The second current mirror circuit is adapted to couple the input current received at input port 121 to the output port 115. It therefore serves to relay or to route the input current to the current amplifier 106 as bias current.

Further, by means of transistor 194 the second current mirror circuit is adapted to receive an amplified bias current from the current amplifier 106 or to couple a respective amplified bias current to the current amplifier 106 that has a different polarity compared to the bias current provided by the output port 115.

In particular, by making use of replicas of an input current, a bias current for pixel implemented amplification of a photoelectric current can be repeatedly reproduced and routed to consecutive or adjacently arranged sensor elements of a radiation sensor. This effectively allows to reduce wiring complexity of a radiation sensor and enables to realize a modular concept for a bias current source, radiation sensor as well as read-out electronics for successive signal processing. Pixel implemented current amplification and bias current regeneration effectively enables a local amplification of photoelectric currents and therefore the entire mechanism of signal acquisition and signal transmission becomes less sensitive to noise and similar disturbances. The local pixel implemented current amplification and bias current regeneration therefore allows to increase the sensitivity as well as to increase the response of a radiation detector, which is particularly advantageous if the components of the radiation sensor are implemented on the basis of CMOS technology.

### LIST OF REFERENCE NUMERALS

- 102: sensor element
- 104: radiation detection portion
- 106: current amplifier
- 107: regenerator output
- 108: radiation
- 110: signal processing module
- 112: sensor element
- 113: amplifier output
- 114: photodiode
- 115: regenerator output
- 116: current amplifier
- 117: regenerator output
- 118: regeneration module
- 119: regenerator output
- 121: regenerator input
- 122: sensor element
- 124: photodiode
- 125: regenerator output
- 129: regenerator output
- 130: radiation sensor
- 132: current source
- 140: radiation sensor
- 150: radiation sensor
- 160: radiation detector
- 162: current amplifier input
- 164: operational amplifier
- 166: resistor
- 168: resistor
- 170: current source
- 172: current source
- 174: operational amplifier
- 176: transistor
- 178: transistor
- 180: operational amplifier
- 182: operational amplifier
- 184: transistor
- 186: transistor
- 188: transistor
- 190: transistor
- 192: transistor
- 194: transistor

## Claims

1. A radiation sensor (130, 140, 150) having a plurality of sensor elements (102, 112, 122), each one of the sensor elements comprising:
- a radiation detection portion (104) being adapted to generate an electric current in response to impingement of electromagnetic radiation (108),
- current amplification means (106) for continuous amplification of the electric current,
wherein the current amplification means (106) provide continuous amplification of the electric current by making use of a bias current, said radiation sensor being **characterized in that** each one of the sensor elements (102) further comprises a current reproduction module (118) for receiving an input current from a first sensor element and providing the bias current to the current amplification means and for generating an output current serving as an input current for a consecutive sensor element (112).

2. The radiation sensor (130, 140, 150) according to claim 1, wherein the sensor elements (102, 112) of the plurality of sensor elements are coupled in a cascaded way by means of the sensor elements' current reproduction modules (118, 128).

3. The radiation sensor (130, 140, 150) according to claim 1, wherein the current reproduction module (118, 128) is coupled to a set of sensor elements and is further adapted to provide each sensor element of the set of sensor elements with the input current.

4. The radiation sensor (130, 140, 150) according to claim 1, wherein the input current and the output current are substantially equal in magnitude.

5. The radiation sensor (130, 140, 150) according to claim 1, wherein the current amplification (106) means and /or the current reproduction module comprise at least one current mirror circuit.

6. The radiation sensor (130, 140, 150) according to claim 1, wherein the current amplification means (106) comprise a transimpedance amplifier.

7. The radiation sensor (130, 140, 150) according to claim 1, wherein the current reproduction module (118, 128) further comprises a second current mirror circuit for coupling the bias current and for coupling the amplified bias current to the current amplification means (106, 116).

8. The radiation sensor (130, 140, 150) according to claim 1, wherein the current amplification (106) means are adapted to generate an amplified current in response to the electric current and wherein the amplified current has an opposite sign compared to the electric current.

9. The radiation sensor (130, 140, 150) according to claim 1, wherein the radiation detection (104) portion, the current amplification means (106) and the current reproduction module (118, 128) are implemented on the basis of Complementary Metal Oxide Semiconductor technology and are adjacently arranged on a common substrate.

10. The radiation sensor (130, 140, 150) according to claim 1, wherein the radiation detection portion is sensitive to X-rays.

11. A radiation sensor (130, 140, 150) having a plurality of sensor elements (102, 112, 122), each one of the sensor elements comprising:
- a photoelectric detection portion (104) being adapted to generate an electric current in response to impingement of electromagnetic radiation (108),
- a current amplifier (106) for generating an amplified current by means of continuous amplification of the electric current,
wherein the current amplifier (106) provides continuous amplification of the electric current by making use of a bias current, said radiation sensor being **characterized in that** each one of the sensor elements (102) further comprises a current reproduction module (118) for receiving an input current from a first sensor element and providing the bias current to the current amplifier and for generating an output current serving as an input current for a consecutive sensor element (112).

12. An X-ray examination apparatus having at least one radiation sensor (130, 140, 150) having a plurality of sensor elements (102, 112, 122), each one of the sensor elements comprising:
- a photoelectric detection portion (104) being adapted to generate an electric current in response to impingement of electromagnetic radiation (108),
- a current amplifier (106) for generating an amplified current by means of continuous amplification of the electric current,
**characterized in that** the current amplifier (106) provides continuous amplification of the electric current by making use of a bias current and each one of the sensor elements (102) further comprises a current reproduction module (118) for receiving an input current from a first sensor element and providing the bias current to the current amplifier and for generating an output current serving as an input current for a consecutive sensor element (112).

## Patentansprüche

1. Strahlungssensor (130, 140, 150) mit einer Vielzahl von Sensorelementen (102, 112, 122), wobei jedes der Sensorelemente Folgendes umfasst:
- einen Strahlungsdetektionsteil (104), der vorgesehen ist, um in Reaktion auf das Auftreffen von elektromagnetischer Strahlung (108) einen elektrisch Strom zu erzeugen,
- Stromverstärkungsmittel (106) zum kontinuierlichen Verstärken des elektrischen Stroms,
wobei die Stromverstärkungsmittel (106) für eine kontinuierliche Verstärkung des elektrischen Stroms sorgen, indem sie einen Verspannungsstrom nutzen, wobei der genannte Strahlungssensor **dadurch gekennzeichnet ist, dass** jedes der Sensorelemente (102) weiterhin ein Stromreproduktionsmodul (118) zum Empfangen eines Eingangsstroms von einem ersten Sensorelement und Liefern des Vorspannungsstroms an die Stromverstärkungsmittel und zum Erzeugen eines Ausgangsstroms umfasst, der als Eingangsstrom für ein nachfolgendes Sensorelement (112) dient.

2. Strahlungssensor (130, 140, 150) nach Anspruch 1, wobei die Sensorelemente (102, 112) der Vielzahl von Sensorelementen mit Hilfe der Stromreproduktionsmodule (118, 128) der Sensorelemente kaskadenweise gekoppelt sind.

3. Strahlungssensor (130, 140, 150) nach Anspruch 1, wobei das Stromreproduktionsmodul (118, 128) mit einer Gruppe von Sensorelementen gekoppelt ist und weiterhin vorgesehen ist, um jedes Sensorelement der Gruppe von Sensorelementen mit dem Eingangsstrom zu versorgen.

4. Strahlungssensor (130, 140, 150) nach Anspruch 1, wobei der Eingangsstrom und der Ausgangsstrom im Wesentlichen die gleiche Größe haben.

5. Strahlungssensor (130, 140, 150) nach Anspruch 1, wobei die Stromverstärkungsmittel (106) und/oder das Stromreproduktionsmodul mindestens eine Stromspiegelschaltung umfassen.

6. Strahlungssensor (130, 140, 150) nach Anspruch 1, wobei die Stromverstärkungsmittel (106) einen Transimpedanzverstärker umfassen.

7. Strahlungssensor (130, 140, 150) nach Anspruch 1, wobei das Stromreproduktionsmodul (118, 128) weiterhin eine zweite Stromspiegelschaltung zum Koppeln des Vorspannungsstroms und zum Koppeln des verstärkten Vorspannungsstroms mit den Stromverstärkungsmitteln (106, 116) umfasst.

8. Strahlungssensor (130, 140, 150) nach Anspruch 1, wobei die Stromverstärkungsmittel (106) vorgesehen sind, um in Reaktion auf den elektrischen Strom einen verstärkten Strom zu erzeugen und wobei der verstärkte Strom im Vergleich zum elektrischen Strom ein umgekehrtes Vorzeichen hat.

9. Strahlungssensor (130, 140, 150) nach Anspruch 1, wobei der Strahlungsdetektionsteil (104), die Stromverstärkungsmittel (106) und das Stromreproduktionsmodul (118, 128) auf der Basis der komplementären Metalloxid-Halbleitertechnologie (Complementary Metal Oxide Semiconductor, CMOS) implementiert sind und benachbart auf einem gemeinsamen Substrat angeordnet sind.

10. Strahlungssensor (130, 140, 150) nach Anspruch 1, wobei der Strahlungsdetektionsteil empfindlich für Röntgenstrahlen ist.

11. Strahlungssensor (130, 140, 150) mit einer Vielzahl von Sensorelementen (102, 112, 122), wobei jedes der Sensorelemente Folgendes umfasst:
- einen photoelektrischen Detektionsteil (104), der vorgesehen ist, um in Reaktion auf das Auftreffen von elektromagnetischer Strahlung (108) einen elektrischen Strom zu erzeugen,
- einen Stromverstärker (106) zum Erzeugen eines verstärkten Stroms mittels kontinuierlicher Verstärkung des elektrischen Stroms,
wobei der Stromverstärker (106) für eine kontinuierliche Verstärkung des elektrischen Stroms sorgt, indem er einen Vorspannungsstrom nutzt, wobei der genannte Strahlungssensor **dadurch gekennzeichnet ist, dass** jedes der Sensorelemente (102) weiterhin ein Stromreproduktionsmodul (118) zum Empfangen eines Eingangsstroms von einem ersten Sensorelement und Liefern des Vorspannungsstroms an den Stromverstärker und zum Erzeugen eines Ausgangsstroms umfasst, der als Eingangsstrom für ein nachfolgendes Sensorelement (112) dient.

12. Röntgenuntersuchungsgerät mit mindestens einem Strahlungssensor (130, 140, 150) mit einer Vielzahl von Sensorelementen (102, 112, 122), wobei jedes der Sensorelemente Folgendes umfasst:
- einen photoelektrischen Detektionsteil (104), der vorgesehen ist, um in Reaktion auf das Auftreffen von elektromagnetischer Strahlung (108) einen elektrisch Strom zu erzeugen,
- einen Stromverstärker (106) zum Erzeugen eines verstärkten Stroms mittels kontinuierlicher Verstärkung des elektrischen Stroms,
**dadurch gekennzeichnet, dass** der Stromverstärker (106) für eine kontinuierliche Verstärkung des elektrischen Stroms sorgt, indem er einen Vorspannungsstrom nutzt und jedes der Sensorelemente (102) weiterhin ein Stromreproduktionsmodul (118) zum Empfangen eines Eingangsstroms von einem ersten Sensorelement und Liefern des Vorspannungsstroms an den Stromverstärker und zum Erzeugen eines Ausgangsstroms umfasst, der als Eingangsstrom für ein nachfolgendes Sensorelement (112) dient.

## Revendications

1. Capteur de rayonnement (130, 140, 150) ayant une pluralité d'éléments capteurs (102, 112, 122), chacun des éléments capteurs comprenant :
- une partie de détection de rayonnement (104) qui est adaptée pour générer un courant électrique en réponse à un bombardement d'un rayonnement électromagnétique (108)
- un moyen d'amplification de courant (106) pour une amplification continue du courant électrique,
dans lequel le moyen d'amplification de courant (106) fournit une amplification continue du courant électrique en faisant usage d'un courant de polarisation, ledit capteur de rayonnement étant **caractérisé en ce que** chacun des éléments capteurs (102) comprend en outre un module de reproduction du courant (118) pour recevoir un courant d'entrée à partir d'un premier élément capteur et fournir le courant de polarisation au moyen d'amplification du courant et pour générer un courant de sortie servant comme courant d'entrée à un élément capteur suivant (112).

2. Capteur de rayonnement (130, 140, 150) selon la revendication 1, dans lequel les éléments capteurs (102, 112) de la pluralité d'éléments capteurs sont couplés en cascade au moyen de modules de reproduction du courant (118, 128) des éléments capteurs.

3. Capteur de rayonnement (130, 140, 150) selon la revendication 1, dans lequel le module de reproduction du courant (118, 128) est couplé à un ensemble d'éléments capteurs et est en outre adapté pour fournir le courant d'entrée à chaque élément capteur de l'ensemble d'éléments capteurs.

4. Capteur de rayonnement (130, 140, 150) selon la revendication 1, dans lequel le courant d'entrée et le courant de sortie sont sensiblement égaux en valeur absolue.

5. Capteur de rayonnement (130, 140, 150) selon la revendication 1, dans lequel le moyen d'amplification de courant (106) et/ou le module de reproduction du courant comprend/comprennent au moins un circuit de miroir de courant.

6. Capteur de rayonnement (130, 140, 150) selon la revendication 1, dans lequel le moyen d'amplification de courant (106) comprend un amplificateur à transimpédance.

7. Capteur de rayonnement (130, 140, 150) selon la revendication 1, dans lequel le module de reproduction du courant (118, 128) comprend en outre un deuxième circuit de miroir de courant pour coupler le courant de polarisation et pour coupler le courant de polarisation amplifié au moyen d'amplification du courant (106, 116).

8. Capteur de rayonnement (130, 140, 150) selon la revendication 1, dans lequel le moyen d'amplification de courant (106) est adapté pour générer un courant amplifié en réponse au courant électrique et dans lequel le courant amplifié a un signe opposé à celui du courant électrique.

9. Capteur de rayonnement (130, 140, 150) selon la revendication 1, dans lequel la partie de détection de rayonnement (104), le moyen d'amplification de courant (106) et le module de reproduction du courant (118, 128) sont implémentés sur base de la technologie à semi-conducteur à oxyde de métal complémentaire (CMOS) et sont disposés de façon adjacente sur un substrat commun.

10. Capteur de rayonnement (130, 140, 150) selon la revendication 1, dans lequel la partie de détection de rayonnement est sensible aux rayons X.

11. Capteur de rayonnement (130, 140, 150) ayant une pluralité d'éléments capteurs (102, 112, 122), chacun des éléments capteurs comprenant :
- une partie de détection photoélectrique (104) qui est adaptée pour générer un courant électrique en réponse à un bombardement d'un rayonnement électromagnétique (108),
- un amplificateur de courant (106) pour générer un courant amplifié au moyen d'une amplification continue du courant électrique,
dans lequel l'amplificateur de courant (106) fournit une amplification continue du courant électrique en faisant usage d'un courant de polarisation, ledit capteur de rayonnement étant **caractérisé en ce que** chacun des éléments capteurs (102) comprend en outre un module de reproduction du courant (118) pour recevoir un courant d'entrée à partir d'un premier élément capteur et fournir le courant de polarisation à l'amplificateur de courant et pour générer un courant de sortie servant comme courant d'entrée pour un élément capteur suivant (112).

12. Dispositif d'examen à rayons X ayant au moins un capteur de rayonnement (130, 140, 150) ayant une pluralité d'éléments capteurs (102, 112, 122), chacun des éléments capteurs comprenant :
- une partie de détection photoélectrique (104) qui est adaptée pour générer un courant électrique en réponse au bombardement d'un rayonnement électromagnétique (108),
- un amplificateur de courant (106) pour générer un courant amplifié au moyen d'une amplification continue du courant électrique,
**caractérisé en ce que** l'amplificateur de courant (106) fournit une amplification continue du courant électrique en faisant usage d'un courant de polarisation et chacun des éléments capteurs (102) comprend en outre un module de reproduction du courant (118) pour recevoir un courant d'entrée d'un premier élément capteur et fournir le courant de polarisation à l'amplificateur de courant et pour générer un courant de sortie servant en tant que courant d'entrée pour un élément capteur suivant (112).
